# EUROPEAN PATENT APPLICATION

(11) **EP 1 136 402 A2**
(43) Date of publication of application: **26.09.2001**
(21) Application number: 01302333.8
(22) Date of filing: 14.03.2001
(51) Int. Cl.: B65G 67/20

(54) **Load handling apparatus**

(30) Priority: 17.03.2000 DE 20005022 U
(71) Applicant: Tasko B.V., 5804 CE Venray (NL)
(72) Inventor: Magnée, Jean Christiaan, 5803 JX Venray (NL)
(74) Representative: Johnson, Terence Leslie

(57) **Abstract**

The invention relates to apparatus for handling a load, comprising a channelled track, a skate device adapted to run in the track, and bogey devices of the skate device whereby the skate device is adapted to run in the track, characterised by means (15, 18) intermediate the length of the skate device (1) remote from an end (A) thereof for limiting angular movement of the bogey device(s) 3.

## Description

The invention relates to load handling apparatus, particularly to that in the form of a track or guide in which a skate device runs.

In such apparatus, there are usually two spaced apart tracks mounted in a floor of a vehicles such as a lorry, trailer or semi-trailer and in each of which a skate device can be inserted for running along the track to carry a load along the track and set it down at a desired position on the floor. To accomplish this, each skate device has an upper load bearing part which is raisable and lowerable relative to lower bogey devices of the skate device, this action being achieved by relative longitudinal movement between the upper part and the lower bogey device, which form a train.

On such relative movement, a ramp and roller arrangement effects the said raising and lowering. When raised, the load bearing part is sufficiently high that a, usually heavy, load it engages can be moved over the floor as the load progresses down the track on the bogey devices when the skate device is pushed or pulled therealong. When lowered, the upper load bearing part lies a little below the level of the floor so that the load is set down thereon, and the skate device can be withdrawn.

The raising and lowering action is effected by a bell crank device at one end of the skate device, the bell crank device being connected to the end of the first bogey in the train of bogey devices of the skate by a link such as a wish-bone link.

Apparatus as hereinbefore described is often used in handling reels of paper. Also, the tracks are often aluminium, while the skate devices are usually made of steel, which is harder than aluminium, and therefore if the skate device skews, tilts or cants, it can damage the track by gouging into the aluminium track for example. This tilting is possible as there is a space between the side of the skate devices and the inner wall of the track. If the load is not loaded correctly, tilting and possibly jamming can occur.

The load has then to be lowered and the skate devices re-positioned before the load can be moved again. This is time-consuming, and expensive if the track is damaged. Indeed the track can be so damaged as to render it useless. Also, if there is overhang of the skate device from an end of the track, operating mechanisms cannot operate the linked bogey devices owing to excessive angular movement between the operating mechanism and bogey device train.

It is an object of the invention to seek to mitigate these disadvantages.

According to a first aspect of the invention, there is provided apparatus for handling a load, comprising a channelled track, a skate device adapted to run in the track, bogey devices of the skate device whereby the skate device is adapted to run in the track, and guide means which centre the skate device in the track during running in the track.

The guide means may comprise laterally projecting bearings mounted at a fore and aft end of the skate device. This provides for centralisation of the skate device in the track during running therealong.

The laterally projecting bearings may be fixed on the skate device as considered in a substantially vertical direction. Thus as the skate device is raised and lowered, the bearing remains at the same level within the track.

There may be two laterally projecting bearings at the fore end of the skate device and two laterally projecting bearings at the aft end of the skate device. This ensures a positive guiding action.

There may be a mounting block at each end on which the respective two laterally projecting bearings are mounted. This provides a firm mounting for the bearings.

According to a second aspect of the invention there is provided apparatus for handling a load, comprising a channelled track, a skate device adapted to run in the track, and bogey devices of the skate device whereby the skate device is adapted to run in the track, guide means which centre the skate device in the track during running on the track, and means intermediate the length of the skate device remote from an end thereof for limiting angular movement of the bogey device(s).

According to a third aspect of the invention there is provided apparatus for handling a load, comprising a channelled track, a skate device adapted to run in the track, bogey devices of the skate device whereby the skate device is adapted to run in the track, and means intermediate the length of the skate device remote from an end thereof for limiting angular movement of the bogey device.

The means may comprise a laterally extending abutment carried by a link between adjacent bogey devices. This is a relatively simple, yet effective construction.

The abutment may engage an end of a side plate of a bogey device remote from an operating mechanism of the skate device. This provides a particularly effective means which can restrict excessive angular movement.

Apparatus for handing a load is hereinafter described, by way of example, with reference to the accompanying drawings.
Fig. 1 shows views from beneath and from the side of an embodiment according to the invention;
Fig. 2 shows front views of a skate device in a track, in the raised and lowered states;
Fig. 3 shows views from beneath and from the side of the front of a skate device;
Fig. 4 shows views from beneath and from the side of the rear of the skate device;
Fig. 5 shows a perspective exploded view of another embodiment of apparatus according to the invention;
Fig. 6 shows an enlarged view of the apparatus of Fig. 5, at the operating mechanism end of the skate device; and
Figs. 7 to 9 show respectively an underneath plan view of a part of assembled apparatus of Figs. 5 and 6, a side elevational view of the assembly in one operative position and a side elevational view in a second operative position.

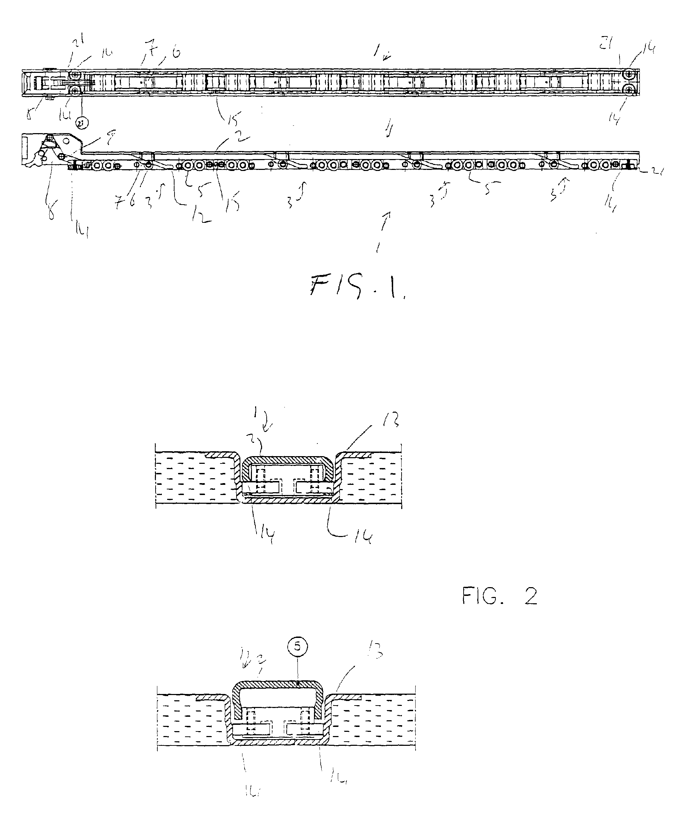

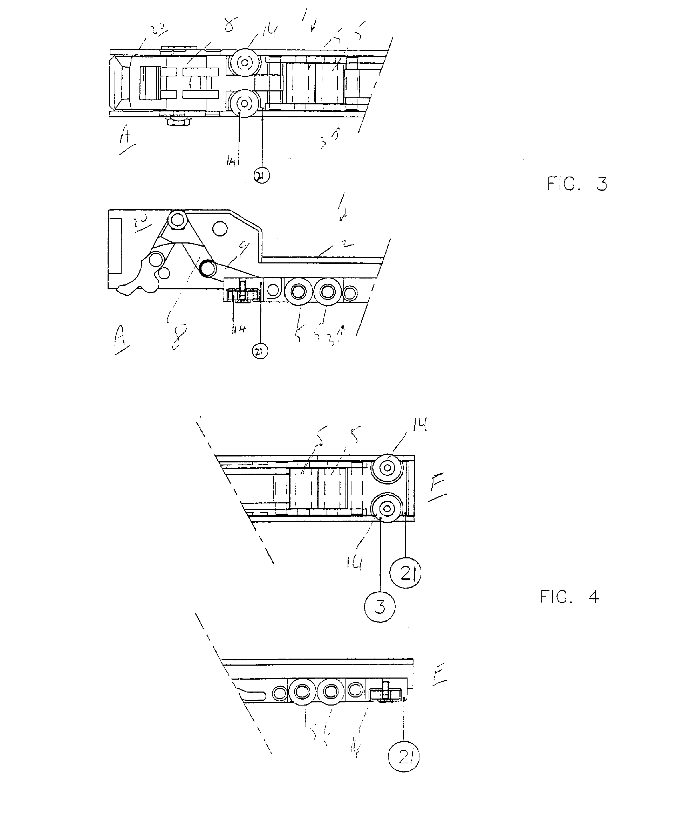

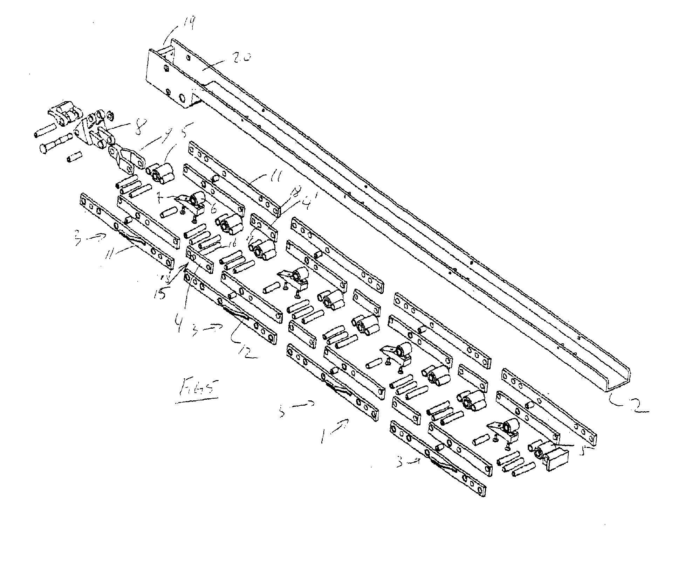

Referring to the drawings, in which like parts are indicated by like reference numerals, and to Figs. 1 to 4 there is shown a skate device 1 having an upper, as viewed, load bearing part 2 and a train of bogey devices 3, each of which is linked to an adjacent bogey device by links 4, 4'. Each skate device 3 has in the embodiment of Figs. 1 to 4, four bogey devices each with four rollers 5, making 16 in all, and in Figs. 5 and 6 each bogey device 3 has two rollers 5, making 8 in all.

In both embodiments the skate device 1 has associated with each bogey device 3 a ramp roller 6 and a fixed ramp 7 secured to the underside of the load bearing part 2.

In each embodiment relative longitudinal movement between the bogey device 3 and upper load bearing part 2, to raise and lower that part, is effected by causing the ramp roller 6 to ride up or ride down the ramp 7, this longitudinal movement being in turn effected by rotation of a bell crank lever 8 which is pivotably connected to a wish-bone link 9 which is also connected to the adjacent end of the first bogey device 3 of the train.

The skate device includes spacers 10, and side plates 11 which have an S-shaped track for receiving a pin of the load bearing surface 2 to provide a smooth rising and lowering of the load bearing surface.

The skate device runs in a channel-shape track is usually of aluminium, but could be of other material, such as steel. Whatever the material, in order to avoid tilting or canting of the skate device, and hence jamming in the track, there is carried by the skate device guide means in the form of laterally extending horizontal bearings or rollers 14 which engage the side walls of the track 13 and thus correspond to the internal width thereof to keep the skate device 1 centred in the track so that it runs substantially parallel to the track.

The horizontal bearings 14 ensure that, apart from themselves, the only items in contact with the track are the rollers 5, which means that the skate devices 1 as a whole cannot damage the track 13. Also, the bearings 14, not being part of the bogey device train, remain in the same vertical position when the skate device is raised and lowered, so that the track is protected when the skate device is raised and lowered because the skate device 1 remains centred in the track 13 by the bearings 14.

There are two bearings 14 at the fore end F and two bearings 14 at the aft end A of each skate device. The bearings 14 are mounted in a block 21 at each end of the skate device.

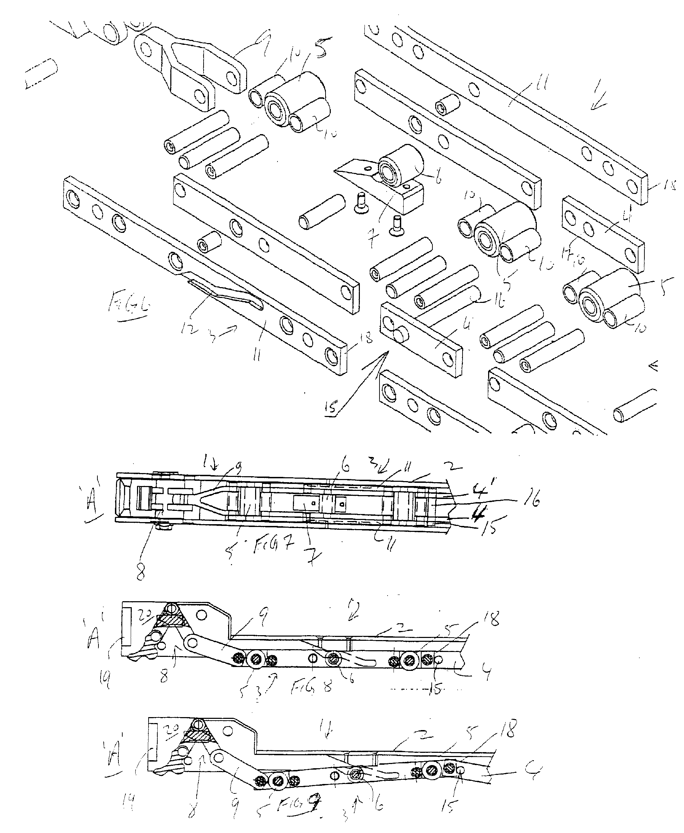

Turning now to Figs. 5 to 9, in that embodiment, in order to restrict or limit angular movement of the bogey device train 3 when the rearmost (left hand as viewed) bogey extends outside a load or support to provide an overhang, there is on the link 4, 4' between adjacent bogey devices an abutment 15 in the form of a projection extending outwardly of the link 4, 4', it being understood that both opposite links carry such an abutment although only that on link 4 is visible. The projections 15 are the free ends of a rod 16 passing through opposite holes 17 in the links 4 and 4'.

In use, if the bogey train drops, the end 18 of the side plates 11 and the abutment 15 engage to lock the bogey train against further angular movement downwardly.

In this position, a rod or lever for actuating the operating mechanism 8, 9 can, on further rotation translate that movement via the bell crank lever 8 and the wish-bone link 9 to longitudinal movement of the bogey device train for raising or lowering via the ramp rollers 6 and ramp 7. There is a gap 19 in a housing 20 for the operating mechanism 8, 9 to allow for this further rotation.

It will be understood that the embodiments of Figs. 1 to 4 and Figs. 5 and 6 may be combined, as shown schematically in Fig. 1.

Using the invention it is possible to provide that a skate device always runs in a centred manner in the track, parallel to the tracks, whereby the load may be transported in one go without having to be rearranged now and again.

An additional advantage is that the only contact between the skate device and the track is through the rollers. This means that the skate device cannot damage the track.

Since the bearings do not change position vertically, the tracks are protected when the skate devices are in both the raised and the lowered state.

## Claims

1. Apparatus for handling a load, comprising a channelled track, a skate device adapted to run in the track, and bogey devices of the skate device whereby the skate device is adapted to run in the track, **characterised by** guide means (14) which centre the skate device (1) in the track (13) during running in the track.

2. Apparatus according to Claim 1, **characterised by** the guide means (14) comprising laterally projecting bearings mounted at a fore and aft end of the skate device (1).

3. Apparatus according to Claim 2, **characterised by** the laterally projecting bearings (14) being fixed on the skate device (1) as considered in a substantially vertical direction.

4. Apparatus according to Claim 2 or Claim 3, **characterised by** there being two laterally projecting bearings (14) at the fore end (F) of the skate device (1) and by two laterally projecting bearings (14) at the aft end (A) of the skate device.

5. Apparatus according to Claim 4, **characterised by** a mounting block (21) at each end (A, F) in which the respective two laterally projecting bearings (14) are mounted.

6. Apparatus for handling a load, comprising a channelled track, a skate device adapted to run in the track, and bogey devices of the skate device whereby the skate device is adapted to run in the track, **characterised by** guide means (14) which centre the skate device in the track during running in the track, and by means (15, 18) intermediate the length of the skate device (1) remote from an end (A) thereof for limiting angular movement of the bogey device(s) (3).

7. Apparatus for handling a load, comprising a channelled track, a skate device adapted to run in the track, and a bogey device or devices of the skate device whereby the skate device is adapted to run in the track, **characterised by** means (15, 18) intermediate the length of the skate device (1) remote from an end (A) thereof for limiting angular movement of the bogey device(s) (3).

8. Apparatus according to Claim 6 or Claim 7, **characterised by** the means 15 comprising a laterally extending abutment (15) carried by a link (4, 4') between adjacent bogey devices (3).

9. Apparatus according to Claim 8, **characterised by** the abutment (15) engaging and end (18) of a side plate (11) of a bogey device (3) remote from an operating mechanism (8, 9) of the skate device (1).
